# EUROPEAN PATENT SPECIFICATION

(11) **EP 1 676 739 B1**
(45) Date of publication and mention of the grant of the patent: **05.03.2008**
(21) Application number: 05028177.3
(22) Date of filing: 22.12.2005
(51) Int. Cl.: B60K 11/08, F01P 11/10

(54) **Cooling device for a vehicle engine**
Kühlvorrichtung für eine Antriebsmaschine eines Fahrzeugs
Dispositif de refroidissement de moteur de véhicule

(30) Priority: 29.12.2004 KR 2004115578
(43) Date of publication of application: 05.07.2006
(73) Proprietor: Doosan Infracore Co., Ltd., Dong-gu Incheon 401-020 (KR)
(72) Inventor: Lee, Ki Ho, Yangcheon-Gu Seoul (KR)
(74) Representative: Sparing Röhl Henseler Patentanwälte European Patent Attorneys

(56) References cited:
- EP-A- 0 799 979
- US-A- 4 830 312
- US-A- 6 092 616

## Description

The invention is directed to an engine-driven vehicle cooling device, and more specifically, to an engine-driven vehicle cooling device for use in industrial vehicles that can cool down a radiator and a charged air cooler with increased efficiency.

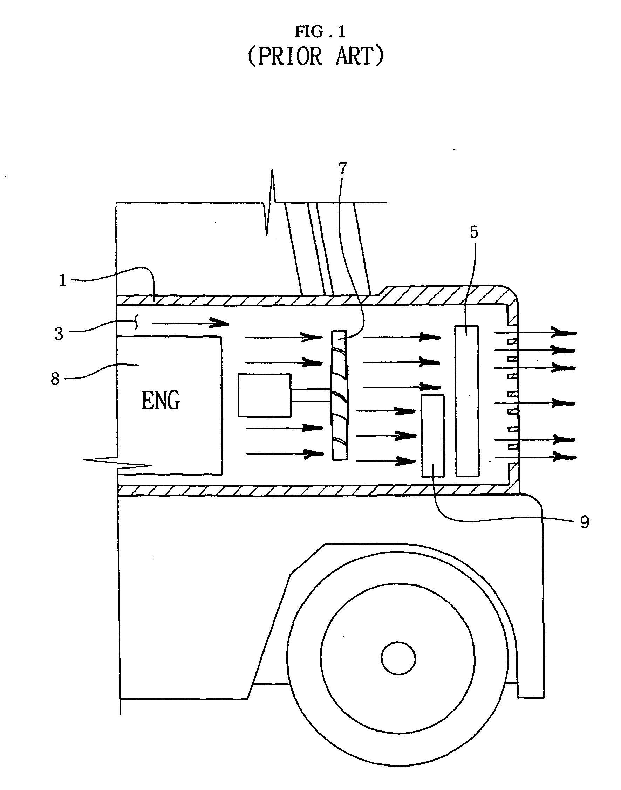

Industrial vehicles, including a forklift truck, an excavator and skid-steer loader for example, is provided with a cooling device for cooling down an engine. As illustrated in FIG. 1, a typical cooling device comprises a radiator 5 provided in an engine room 3 of a vehicle body 1 and a cooling fan 7 for blowing an air toward the radiator 5. The cooling fan 7 is designed to draw the air within the engine room 3 and then direct it toward the radiator 5 to thereby cool down the cooling water that circulates through the radiator 5. After passing through the radiator 5, the air is discharged to the outside of the vehicle body 1 through a rear opening of the engine room 3.

The cooling device serves also to cool down a charged air cooler 9 which in turn functions to cool down an intake air before entry into a combustion chamber of an engine 8. More specifically, the state-of-the-art forklift trucks is provided with the charged air cooler 9 that cools down the intake air compressed and introduced into the engine 8 for the purpose of enhancing the combustion efficiency of a fuel-air mixture. The charged air cooler 9 is cooled down by the air stream supplied from the cooling fan 7 of the cooling device. As can be seen in FIG. 1, the charged air cooler 9 is smaller in size than the radiator 5 and typically disposed in front of the radiator 5 in a parallel relationship with each other.

In the prior art cooling device as noted above, reduction of the cooling efficiency for the charged air cooler 9 is unavoidable due to the fact that the air of elevated temperature is drawn from the engine room 3 and directed to the charged air cooler 9. In other words, while the air in the engine room 3 remains heated up to a temperature of 70-80 C°, the charged air cooler 9 exhibits the maximum cooling performance at a temperature of 50 C° or less. This means that the air whose temperature is as high as 70-80 C° does not improve but reduce the cooling efficiency of the charged air cooler 9.

Known from EP-A-0 799 979 is an engine-driven vehicle cooling device according to the preamble of claim 1.

It is an object of the invention to provide an engine-driven vehicle cooling device of the type capable of cooling down a charged air cooler with external cold air to thereby enhance the cooling efficiency for the charged air cooler.

The invention provides an engine-driven vehicle cooling device, comprising: an engine room for reception of an engine; a radiator provided within the engine room for cooling down a cooling water circulating through the engine; a cooling fan positioned between the engine and the radiator for blowing an internal air present in the engine room toward the radiator; a charged air cooler smaller in size than the radiator and disposed between the radiator and the cooling fan in a parallel relationship with the radiator; a shroud provided at an intake side of the cooling fan in the engine room for obstructing a stream of the internal air heading for the charged air cooler; and an external air introduction means provided between the shroud and the cooling fan for allowing an external air present outside the engine room to be supplied to the charged air cooler as the cooling fan is caused to rotate.

It is preferred that the external air introduction means comprise an inlet opening formed through a wall of the engine room in between the cooling fan and the shroud for bringing the engine room in communication with the outside.

It is further preferred that the shroud extend from an engine-side edge of the inlet opening into the engine room to shade a part of the cooling fan from the stream of the internal air.

It is also preferred that the shroud be slanted at a predetermined angle with respect to the cooling fan so as to direct a stream of the external air to the cooling fan.

It is additionally preferred that the shroud be provided with opposite side plate parts so curved as to at least partially enclose flank ends of the cooling fan.

It is preferred that the inlet opening comprise a bottom opening formed through a bottom wall of the engine room and side openings formed through side walls of the engine room between the cooling fan and the shroud.

It is preferred that the shroud comprise peripheral plate parts respectively extending from engine-side edges of the bottom opening and the side openings toward the center of the engine room and a central plate part disposed at the center of the engine room to join with the peripheral plate parts.

It is a preferred embodiment that each of the peripheral plate parts be slanted at a predetermined angle toward the cooling fan so as to direct a stream of the external air to the cooling fan.

The above and other objects, features and advantages of the present invention will become apparent from the following description of preferred embodiments given in conjunction with the accompanying drawings, in which:
FIG. 1 is a partially cut-away side elevational view showing a prior art engine-driven vehicle cooling device.
FIG. 2 is a partially cut-away side elevational view showing a first embodiment of an engine-driven vehicle cooling device in accordance with the invention.
FIG. 3 is a cross-sectional view taken along line III-III in FIG. 2.
FIG. 4 is a perspective view illustrating an external air introduction means and a shroud employed an engine-driven vehicle cooling device according to the first embodiment of the invention shown in FIG. 2.
FIG. 5 is a partially cut-away side elevational view showing a second embodiment of an engine-driven vehicle cooling device in accordance with the invention.
FIG. 6 is a cross-sectional view taken along line VI-VI in FIG. 5.
FIG. 7 is a perspective view illustrating an external air introduction means and a shroud employed an engine-driven vehicle cooling device according to the second embodiment of FIG. 5.
FIG. 8 is a partially cut-away side elevational view showing a third embodiment of an engine-driven vehicle cooling device in accordance with the invention.
FIG. 9 is a bottom perspective view illustrating an external air introduction means and a shroud employed an engine-driven vehicle cooling device according to the third embodiment of FIG. 8.

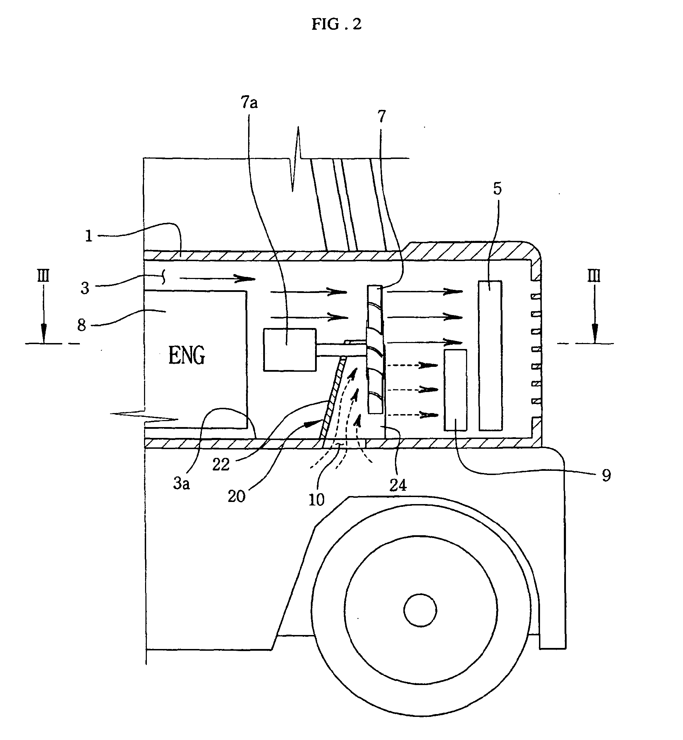

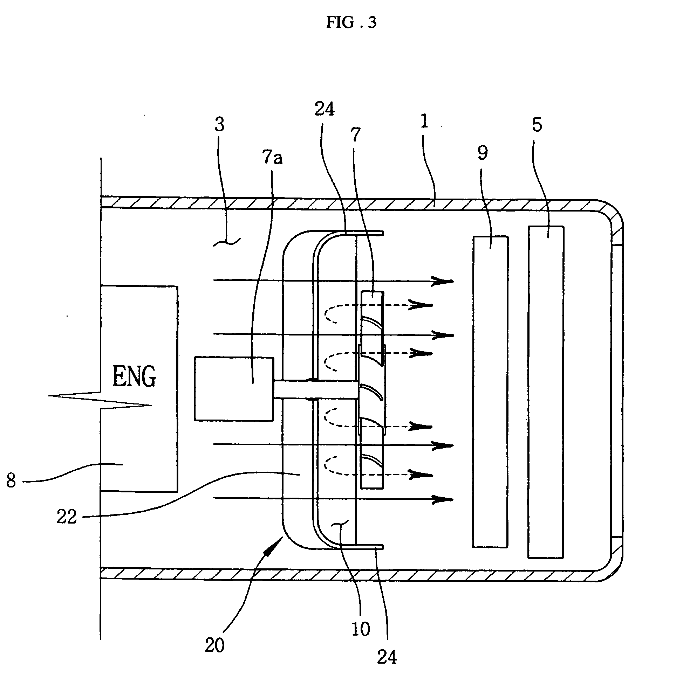

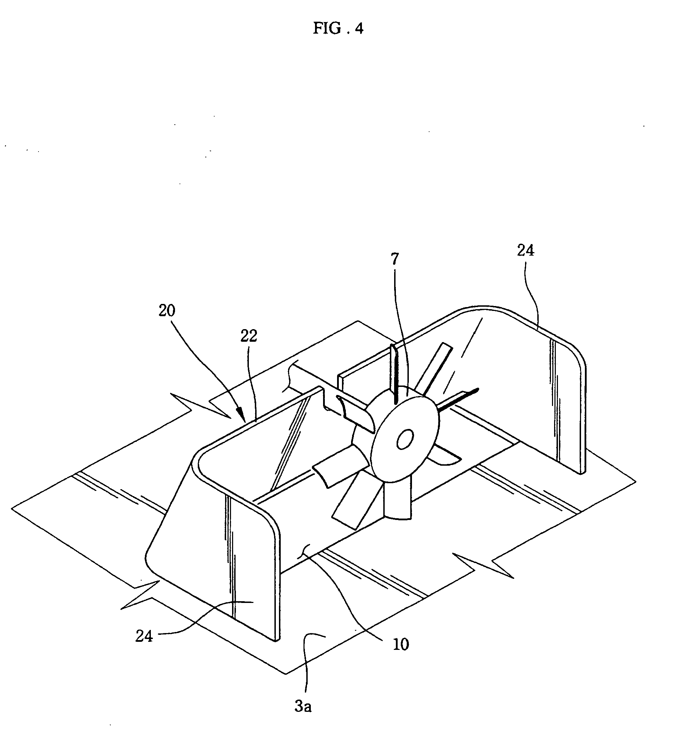

Referring first to FIGS. 2 through 4, there is shown an engine-driven vehicle cooling device according to a first embodiment of the present invention. The cooling device of the first embodiment includes a radiator 5 mounded at the rear of an engine 8 in a spaced-apart relationship therewith. The radiator 5 provides a passageway through which cooling water circulates.

The cooling device further includes a cooling fan 7 which is rotatingly driven by an electric motor 7a to blow a cooling air toward the radiator 5. More specifically, the cooling fan 7 serves to draw an internal air present in an engine room 3 and then direct it to the radiator 5 to thereby cool down the cooling water circulating through the radiator 5. After passing through the radiator 5, the internal air is discharged to the outside of the vehicle body 1 through a rear opening of the engine room 3.

A charged air cooler 9 is disposed between the radiator 5 and the cooling fan 7 in a generally parallel relationship with the radiator 5. The charged air cooler 9 is smaller in size than the radiator 5 and mounted on the bottom wall of the engine room 3.

Furthermore, the cooling device includes an external air introduction means provided between the engine 8 and the cooling fan 7 for allowing an external air present outside the engine room 3 to be supplied to the charged air cooler 9 as the cooling fan 7 is caused to rotate.

The external air introduction means comprises an inlet opening 10 formed through the bottom wall 3a of the engine room 3 at the rear of the cooling fan 7 for bringing the engine room 3 in communication with the outside.

The inlet opening 10 is so arranged and sized that the cooling fan 7 can draw, when in rotation, the external cold air as much as possible through the inlet opening 10. The external air thus introduced is directed to the charged air cooler 9 to cool down the charged air cooler 9 to below a temperature of , e.g., 50°C, thereby enabling the charged air cooler 9 to cool down an compressed intake air for combustion in the engine 8 with enhanced efficiency.

The cooling fan 7 draws at its upper part the internal air present in the engine room 3 and direct the internal air to the radiator 5.

Referring again to FIGS. 2 through 4, the cooling device further includes a shroud 20 provided at an intake side of the cooling fan 7 in the engine room 3 for obstructing a stream of the internal air heading for the charged air cooler 9.

The shroud 20 extends from an engine-side edge of the inlet opening 10 into the engine room 3 to shade a part of the cooling fan 7 from the stream of the internal air. The shroud 20 is slanted at a predetermined angle with respect to the cooling fan 7 so as to direct a stream of the external air to the cooling fan 7.

More specifically, the shroud 20 is provided with a center plate part 22 extending upwards from the engine-side edge of the inlet opening 10 to just above a rotational axis of the cooling fan 7 and opposite side plate parts 24 so curved as to at least partially enclose the flank ends of the cooling fan 7.

The center plate part 22 of the shroud 20 serves to shade a lower part of the cooling fan 7 from the stream of the internal air created by the rotation of the cooling fan 7. Also, the center plate part 22 helps to direct a stream of the external air introduced through the inlet opening 10 to the lower part of the cooling fan 7. This ensures that the external air is drawn through the inlet opening 10 with increased efficiency by the vacuum pressure developed by the rotation of the cooling fan 7, thus allowing an increased quantity of the external air to be supplied to the charged air cooler 9.

The opposite side plate parts 24 of the shroud 20 help to prevent the stream of the internal air from being admixed with the stream of the external air introduced through the inlet opening 10. This enables the external cold air to be supplied to the charged air cooler 9 with little or no possibility of merging with the internal hot air.

The center plate part 22 of the shroud 20 is inclined with respect to the cooling fan 7 in such a manner that the spacing between the center plate part 22 and the cooling fan 7 becomes greatest at the bottom and smallest at the top of the center plate part 22. This assists in guiding the stream of the external air to the cooling fan 7 while allowing the stream of the internal air to smoothly flow over the center plate part 22.

Desirably, the center plate part 22 of the shroud 20 has a height greater than that of the charged air cooler 9. This is to reduce or preclude the likelihood that the stream of the internal air is unintentionally headed for the charged air cooler 9.

The engine-driven vehicle cooling device of the first embodiment as set forth above operates as follows. If the cooling fan 7 starts rotation in order to cool down the engine 8, the internal air in the engine room 3 is drawn by the upper part of the cooling fan 7 and then directed to the radiator 5 to thereby cool down the cooling water that circulates through the radiator 5.

Concurrently, the cooling fan 7 draws at its lower part the external cold air through the inlet opening 10 and then direct the external air to the charged air cooler 9. This assures that the charged air cooler 9 is efficiently cooled down with the external cold air, which in turn enables the charged air cooler 9 to cool down the compressed intake air with increased efficiency prior to entry into engine combustion chambers.

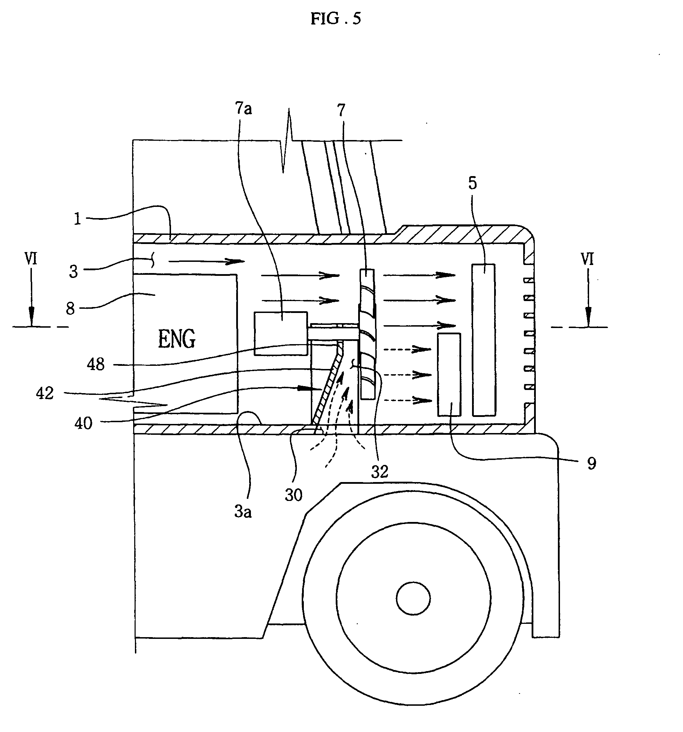

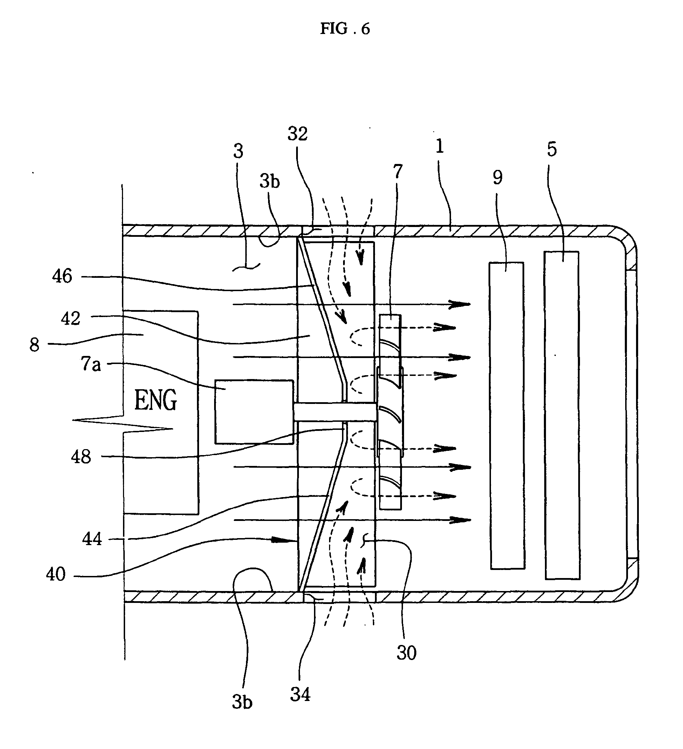

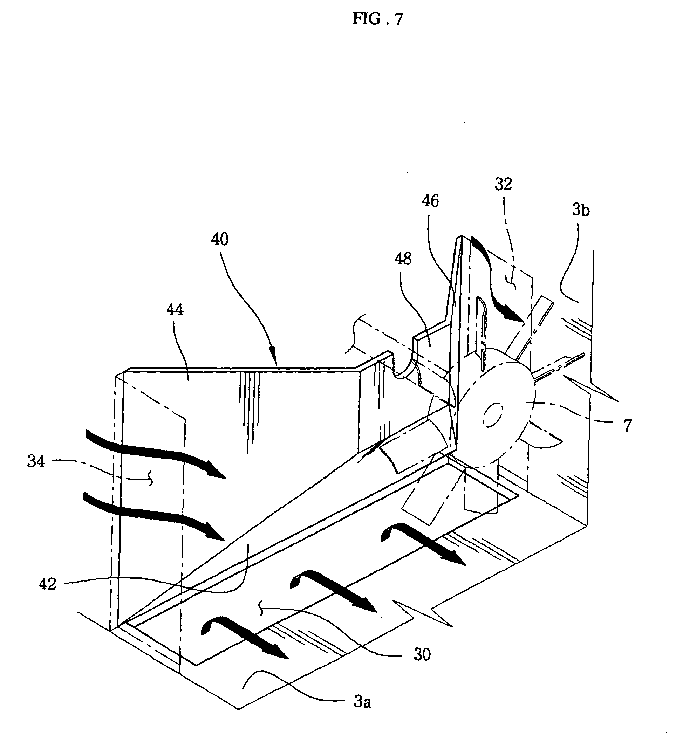

Turning now to FIGS. 5 through 7, there is shown an engine-driven vehicle cooling device according to a second embodiment of the present invention.

The cooling device of the second embodiment comprises an external air introduction means that consists of a bottom inlet opening 30 formed through a bottom wall 3a of the engine room 3 and side inlet openings 32, 34 formed through the opposite side walls 3b of the engine room 3.

The bottom and side inlet openings 30, 32, 34 provided on the three walls of the engine room 3 around a cooling fan 7 allow an increased quantity of the external air to be drawn into the engine room 3 by the cooling fan 7 and then supplied to a charged air cooler 9.

The cooling device of the second embodiment further includes a shroud 40 provided at an intake side of the cooling fan 7 in the engine room 3 for obstructing a stream of the internal air heading for a charged air cooler 9.

The shroud 40 is composed of first through third peripheral plate parts 42, 44, 46 respectively extending from engine-side edges of the bottom inlet opening 30 and the side openings 32, 34 toward the center of the engine room 3 and a central plate part 48 disposed at the center of the engine room 3 to join with the peripheral plate parts 42, 44, 46.

As in the first embodiment noted above, the shroud 40 serves to shade the lower part of the cooling fan 7 from a stream of the internal air, thus preventing the internal air stream from heading for the charged air cooler 9. Also, the shroud 40 helps to guide the stream of the external air introduced through the inlet openings 30, 32, 34 toward the lower part of the cooling fan 7. Employing the shroud 40 of this configuration enables the cooling fan 7 to directly apply a vacuum pressure to the inlet openings 30, 32, 34.

The peripheral plate parts 42, 44, 46 are slanted at a predetermined angle toward the cooling fan 7 so as to effectively direct the stream of the external air to the cooling fan 7. This allows the stream of the external air to flow along the surfaces of the peripheral plate parts 42, 44, 46 to the intake side of the cooling fan 7.

According to the cooling device of the second embodiment as described above, it is possible to introduce, and supply the charged air cooler with, an increased amount of the external cold air through a multiple number of inlet openings, which helps to raise the cooling efficiency of the charged air cooler up to a possible maximum extent.

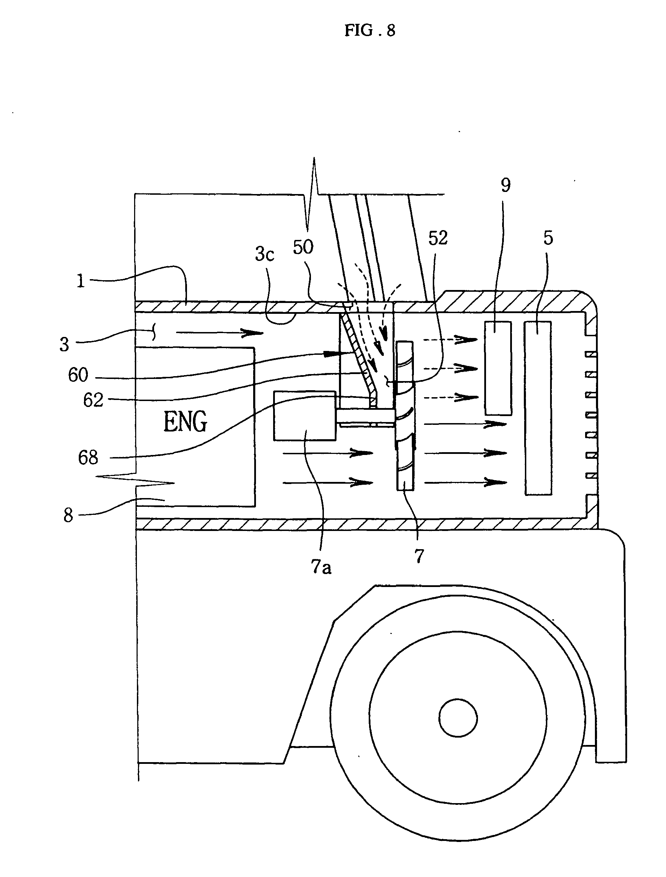

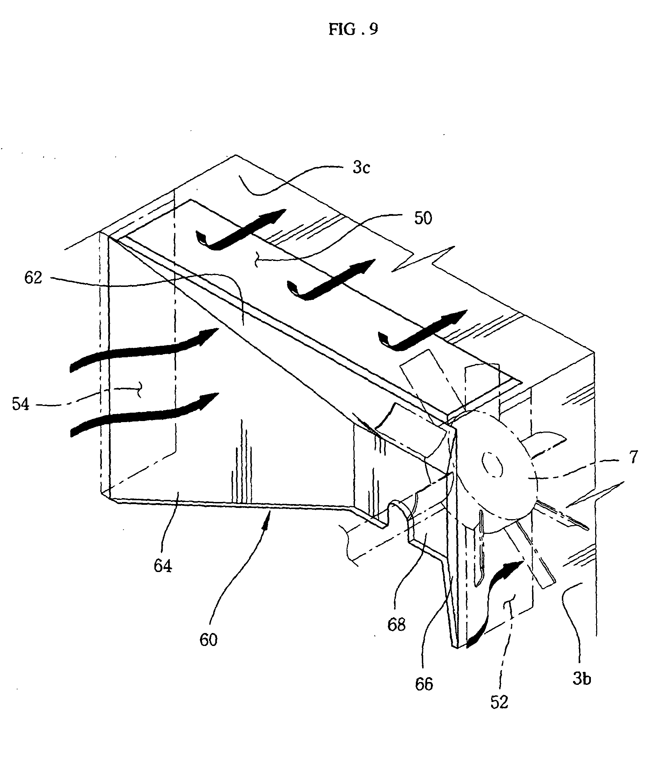

Referring to FIGS. 8 and 9, there is shown an engine-driven vehicle cooling device according to a third embodiment of the present invention. The cooling device of the third embodiment includes a charged air cooler 9 mounted adjacent to the ceiling of an engine room 3 in front of a radiator 5.

The cooling device of the third embodiment comprises an external air introduction means that consists of a top inlet opening 50 formed through a ceiling wall 3c of the engine room 3 and side inlet openings 52, 54 formed through the opposite side walls 3b of the engine room 3. The top and side inlet openings 50, 52, 54 allow an external air to be introduced into the engine room 3 therethrough as a cooling fan 7 is caused to rotate.

The cooling device of the third embodiment further includes a shroud 60 provided at an intake side of the cooling fan 7 in the engine room 3 for obstructing a stream of the internal air heading for a charged air cooler 9.

The shroud 60 is composed of first through third peripheral plate parts 62, 64, 66 respectively extending from engine-side edges of the bottom inlet opening 50 and the side openings 52, 54 toward the center of the engine room 3 and a central plate part 68 disposed at the center of the engine room 3 to join with the peripheral plate parts 62, 64, 66.

Similarly in the second embodiment noted above, the shroud 60 serves to shade the upper part of the cooling fan 7 from a stream of the internal air, thus preventing the internal air stream from heading for the charged air cooler 9. Also, the shroud 60 helps to guide the stream of the external air introduced through the inlet openings 50, 52, 54 toward the upper part of the cooling fan 7. Employing the shroud 60 of this configuration enables the cooling fan 7 to directly apply a vacuum pressure to the inlet openings 50, 52, 54.

The peripheral plate parts 62, 64, 66 are slanted at a predetermined angle toward the cooling fan 7 so as to effectively direct the stream of the external air to the cooling fan 7. This allows the stream of the external air to flow along the surfaces of the peripheral plate parts 62, 64, 66 to the intake side of the cooling fan 7.

As described in the foregoing, the engine-driven vehicle cooling device of the present invention is capable of cooling down a charged air cooler with an external cold air of about 50°C or less to thereby enhance the cooling efficiency for the charged air cooler. This enables the charged air cooler to positively cool down a compressed intake air before entry into engine combustion chambers, thus improving the performance of an engine.

## Claims

1. An engine-driven vehicle cooling device, comprising:
an engine room (3) for reception of an engine (8);
a radiator (5) provided within the engine room (3) for cooling down a cooling water circulating through the engine (8);
a cooling fan (7) positioned between the engine (8) and the radiator (5) for blowing an internal' air present in the engine room (3) toward the radiator (5); and
a charged air cooler (9) smaller in size than the radiator (5) and disposed between the radiator (5) and the cooling fan (7) in a parallel relationship with the radiator (5);
**characterized by**
a shroud (20; 40; 60) provided at an intake side of the cooling fan (7) in the engine room (3) for obstructing a stream of the internal air heading for the charged air cooler (9); and
an external air introduction means provided between the shroud (20, 40, 60) and the cooling fan (7) for allowing an external air present outside the engine room (3) to be supplied to the charged air cooler (9) as the cooling fan (7) is caused to rotate.

2. The engine-driven vehicle cooling device as recited in claim 1, wherein the external air introduction means comprises an inlet opening (10; 30; 50) formed through a wall of the engine room (3) in between the cooling fan (7) and the shroud (20, 40, 60) for bringing the engine room (3) in communication with the outside.

3. The engine-driven vehicle cooling device as recited in claim 2, wherein the shroud (20; 40; 60) extends from an engine-side edge of the inlet opening (10; 30; 50) into the engine room (3) to shade a part of the cooling fan (7) from the stream of the internal air.

4. The engine-driven vehicle cooling device as recited in claim 3, wherein the shroud (20; 40; 60) is slanted at a predetermined angle with respect to the cooling fan (7) so as to direct a stream of the external air to the cooling fan (7).

5. The engine-driven vehicle cooling device as recited in claim 3, wherein the shroud (20; 40; 60) is provided with opposite side plate parts (24) so curved as to at least partially enclose flank ends of the cooling fan (7).

6. The engine-driven vehicle cooling device as recited in claim 2, wherein the inlet opening (10; 30; 50) comprises a bottom opening (30) formed through a bottom wall (3a) of the engine room (3) and side openings (32, 34; 52, 54) formed through side walls of the engine room (3) between the cooling fan (7) and the shroud (20; 40; 60).

7. The engine-driven vehicle cooling device as recited in claim 6, wherein the shroud (20; 40; 60) comprises peripheral plate parts (42, 44, 46; 62, 64, 66) respectively extending from engine-side edges of the bottom opening (30; 50) and the side openings (32, 34; 52 54) toward the center of the engine room (3) and a central plate part (48) disposed at the center of the engine room (3) to join with the peripheral plate parts (42, 44, 46; 62, 64, 66).

8. The engine-driven vehicle cooling device as recited in claim 7, wherein each of the peripheral plate parts (42, 44, 46; 62, 64, 66) is slanted at a predetermined angle toward the cooling fan (7) so as to direct a stream of the external air to the cooling fan (7).

## Patentansprüche

1. Kühlvorrichtung für motorgetriebenes Fahrzeug, die umfasst:
einen Motorraum (3) für die Aufnahme eines Motors (8);
einen Kühler (5), der in dem Motorraum (3) vorgesehen ist, um das durch den Motor (8) zirkulierende Kühlwasser zu kühlen;
einen Lüfter (7), der zwischen dem Motor (8) und dem Kühler (5) positioniert ist, um Innenluft, die in dem Motorraum (3) vorhanden ist, zum Kühler (5) zu blasen; und
einen Ladeluftkühler (9), dessen Abmessungen geringer als jene des Kühlers (5) sind und der zwischen dem Kühler (5) und dem Lüfter (7) in einer zu dem Kühler (5) parallelen Beziehung angeordnet ist;
**gekennzeichnet durch**
eine Abschirmung (20; 40; 60), die an einer Saugseite des Lüfters (7) im Motorraum (3) vorgesehen ist, um einen Strom der Innenluft, die sich zu dem Ladeluftkühler (9) bewegt, zu blockieren; und
ein Außenluft-Einleitungsmittel, das zwischen der Abschirmung (20, 40, 60) und dem Lüfter (7) vorgesehen ist, um zu ermöglichen, dass außerhalb des Motorraums (3) vorhandene Außenluft dem Ladeluftkühler (9) zugeführt wird, wenn der Lüfter (7) zum Drehen veranlasst wird.

2. Kühlvorrichtung für motorgetriebenes Fahrzeug nach Anspruch 1, wobei das Außenluft-Einleitungsmittel eine Einlassöffnung (10; 30; 50), die durch eine Wand des Motorraums (3) zwischen dem Lüfter (7) und der Abschirmung (20, 40, 60) ausgebildet ist, aufweist, um eine Verbindung zwischen dem Motorraum (3) und der äußeren Umgebung herzustellen.

3. Kühlungsvorrichtung für motorgetriebenes Fahrzeug nach Anspruch 2, wobei sich die Abschirmung (20; 40; 60) von einer motorseitigen Kante der Einlassöffnung (10; 30; 50) in den Motorraum (3) erstreckt, um einen Teil des Lüfters (7) vor dem Strom der Innenluft abzuschirmen.

4. Kühlungsvorrichtung für motorgetriebenes Fahrzeug nach Anspruch 3, wobei die Abschirmung (20; 40; 60) um einen vorgegebenen Winkel in Bezug auf den Lüfter (7) geneigt ist, um so einen Strom der Außenluft zu dem Lüfter (7) zu lenken.

5. Kühlungsvorrichtung für motorgetriebenes Fahrzeug nach Anspruch 3, wobei die Abschirmung (20; 40; 60) mit gegenüberliegenden Seitenplattenabschnitten (24) versehen ist, die so gekrümmt sind, dass sie Schaufelenden des Lüfters (7) wenigstens teilweise umschließen.

6. Kühlungsvorrichtung für motorgetriebenes Fahrzeug nach Anspruch 2, wobei die Einlassöffnung (10; 30; 50) eine Bodenöffnung (30), die durch eine Bodenwand (3a) des Motorraums (3) ausgebildet ist, und seitliche Öffnungen (32, 34; 52, 54), die durch Seitenwände des Motorraums (3) zwischen dem Lüfter (7) und der Abschirmung (20; 40; 60) ausgebildet sind, umfasst.

7. Kühlungsvorrichtung für motorgetriebenes Fahrzeug nach Anspruch 6, wobei die Abschirmung (20; 40; 60) Umfangsplattenabschnitte (42, 44, 46; 62, 64, 66), die sich jeweils von motorseitigen Kanten der Bodenöffnung (30; 50) und von den Seitenöffnungen (32, 34; 52, 54) zur Mitte des Motorraums (3) erstrecken, und einen Mittelplattenabschnitt (48), der in der Mitte des Motorraums (3) angeordnet und mit den Umfangsplattenabschnitten (42, 44, 46; 62, 64, 66) verbunden ist, umfasst.

8. Kühlungsvorrichtung für motorgetriebenes Fahrzeug nach Anspruch 7, wobei jeder der Umfangsplattenabschnitte (42, 44, 46; 62, 64, 66) unter einem vorgegebenen Winkel zu dem Lüfter (7) geneigt ist, um so einen Strom der Außenluft zu dem Lüfter (7) zu lenken.

## Revendications

1. Dispositif de refroidissement d'un véhicule entraîné par un moteur, comprenant:
un compartiment moteur (3) pour la réception d'un moteur (8);
un radiateur (5) logé à l'intérieur du compartiment moteur (3) pour refroidir une eau de refroidissement circulant à travers le moteur (8);
un ventilateur (7) positionné entre le moteur (8) et le radiateur (5) pour souffler l'air interne présent dans le compartiment moteur (3) vers le radiateur (5); et
un refroidisseur d'air chargé (9) ayant une taille inférieure à celle du radiateur (5) et disposé entre le radiateur (5) et le ventilateur (7) dans une relation parallèle avec le radiateur (5);
**caractérisé par**:
un déflecteur (20; 40; 60) disposé au niveau d'un côté d'admission du ventilateur (7) dans le compartiment moteur (3) pour obstruer un courant d'air interne se dirigeant vers le refroidisseur d'air chargé (9); et
un moyen d'introduction d'air externe disposé entre le déflecteur (20, 40, 60) et le ventilateur (7) permettant qu'un air externe présent à l'extérieur du compartiment moteur (3) soit délivré vers le refroidisseur d'air chargé (9) à mesure que le ventilateur (7) est amené à tourner.

2. Dispositif de refroidissement d'un véhicule entraîné par un moteur selon la revendication 1, dans lequel le moyen d'introduction d'air externe comprend une ouverture d'entrée (10; 30; 50) formée à travers une paroi du compartiment moteur (3) entre le ventilateur (7) et le déflecteur (20, 40, 60) pour amener le compartiment moteur (3) en communication avec l'extérieur.

3. Dispositif de refroidissement d'un véhicule entraîné par un moteur selon la revendication 2, dans lequel le déflecteur (20; 40; 60) s'étend d'un bord du côté moteur de l'ouverture d'entrée (10; 30; 50) dans le compartiment moteur (3) pour abriter une partie du ventilateur (7) du courant d'air interne.

4. Dispositif de refroidissement d'un véhicule entraîné par un moteur selon la revendication 3, dans lequel le déflecteur (20; 40; 60) est incliné suivant un angle prédéterminé par rapport au ventilateur (7), de manière à diriger un courant d'air externe vers le ventilateur (7).

5. Dispositif de refroidissement d'un véhicule entraîné par un moteur selon la revendication 3, dans lequel le déflecteur (20; 40; 60) est doté de parties de plaque latérales opposées (24) inclinées de manière à envelopper au moins partiellement les extrémités de flanc du ventilateur (7).

6. Dispositif de refroidissement d'un véhicule entraîné par un moteur selon la revendication 2, dans lequel l'ouverture d'entrée (10; 30; 50) comprend une ouverture inférieure (30) formée à travers une paroi inférieure (3a) du compartiment de moteur (3) et des ouvertures latérales (32, 34; 52, 54) formées à travers les parois latérales du compartiment de moteur (3) entre le ventilateur (7) et le déflecteur (20; 40; 60).

7. Dispositif de refroidissement d'un véhicule entraîné par un moteur selon la revendication 6, dans lequel le déflecteur (20; 40; 60) comprend des parties de plaque périphériques (42, 44, 46; 62, 64, 66), s'étendant respectivement à partir des bords latéraux du moteur de l'ouverture inférieure (30; 50) et les ouvertures latérales (32, 34; 52, 54) vers le centre du compartiment de moteur (3), et une partie de plaque centrale (48) disposée au niveau du centre du compartiment de moteur (3) pour être reliée aux parties de plaque périphériques (42, 44, 46; 62, 64, 66).

8. Dispositif de refroidissement d'un véhicule entraîné par un moteur selon la revendication 7, dans lequel chacune des pièces de plaque périphériques (42, 44, 46; 62, 64, 66) est inclinée suivant un angle prédéterminé vers le ventilateur (7), de manière à diriger un courant d'air externe vers le ventilateur (7).
